(19) Europäisches Patentamt
European Patent Office
Office européen des brevets

(11) EP 0 958 248 B1

(12) **EUROPEAN PATENT SPECIFICATION**

(45) Date of publication and mention of the grant of the patent:
**18.09.2002 Bulletin 2002/38**

(21) Application number: **97917312.7**

(22) Date of filing: **15.04.1997**

(51) Int Cl.[7]: **C02F 1/52**, C01G 49/00, C01G 49/14

(86) International application number:
**PCT/FI97/00229**

(87) International publication number:
**WO 97/038944 (23.10.1997 Gazette 1997/45)**

(54) **PROCESS FOR THE PREPARATION OF WATER PURIFICATION SOLUTIONS CONTAINING FERRIC IRON AND THE USE OF THE PRODUCT AS OF OBTAINED**

PROZESS ZUR HERSTELLUNG VON LOSUNGEN MIT DREIWERTIGEN EISEN ZUR WASSERREINIGUNG UND VERWENDUNG DES SO ERHALTENEN PRODUKTES

PROCEDE DE PREPARATION DE SOLUTIONS DE TRAITEMENT DE L'EAU CONTENANT DU FER FERRIQUE ET UTILISATION DU PRODUIT AINSI OBTENU

(84) Designated Contracting States:
**AT BE CH DE DK ES FR GB GR IE IT LI NL PT SE**

(30) Priority: **16.04.1996 FI 961660**

(43) Date of publication of application:
**24.11.1999 Bulletin 1999/47**

(73) Proprietor: **KEMIRA CHEMICALS OY**
**00101 Helsinki (FI)**

(72) Inventors:
- **JOKINEN, Simo**
  **FIN-90150 Oulu (FI)**
- **JÄFVERSTRÖM, Stefan**
  **S-703 75 Örebro (SE)**
- **KENAKKALA, Timo**
  **FIN-90420 Oulu (FI)**
- **LHOTA, Oliva**
  **S-253 75 Helsingborg (SE)**
- **TUOMARLA, Juhani**
  **FIN-02200 Espoo (FI)**
- **STENDAHL, Kjell**
  **S-255 91 Helsingborg (SE)**

(74) Representative: **Saijonmaa, Olli-Pekka et al**
**Berggren Oy Ab,**
**P.O. Box 16**
**00101 Helsinki (FI)**

(56) References cited:
**WO-A-95/00446** **CA-A- 1 094 326**

- **CHEMICAL ABSTRACTS, Volume 120, No. 22, 30 May 1994, (Columbus, Ohio, USA), page 242, the Abstract No. 274636s; & CS,A,277 141, (KREPELKA, JAN et al.), 18 November 1992.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 958 248 B1

## Description

The invention relates to a process for the preparation of water purification solutions containing ferric iron from ferrous iron, in which process the ferrous iron in the form of an aqueous solution and a raw material which may contain impurities are oxidized at an elevated temperature so that a precipitable, substantially pure ferric compound and a solution phase which contains the said impurities are obtained.

By the process according to the invention, it is possible to produce ferric chemicals suitable for water purification, in particular from impure ferrous raw materials, such as impure ferrous sulfate obtained as a byproduct from industrial processes and waste solutions from pickling.

In the present application, the term impurity means the following injurious elements in drinking water: Pb, Co, Cr, Cu, Mn, Ni, Zn, Hg, As, Cd, Sb, Se. One common impurity in ferrous sulfate is Mn.

Ferric chemicals are commonly used as chemical coagulants in water purification. They are prepared from iron compounds obtained as byproducts or as wastes from industrial processes. Examples of such materials are ferrous sulfate formed in connection with titanium oxide production, and chloride- or sulfate-based, iron-containing pickling solutions. However, the use of these raw materials is limited by the fact that they often contain impurities on the concentration of which there are restrictions. Thus, for example, chemicals which contain large amounts of Mn cannot be used for the purification of drinking water. A chemical such as this can thus be used only for the treatment of waste water or sludge.

A conventional method for preparing a ferric sulfate solution from a ferrous sulfate obtained as a byproduct from industrial processes is first to dissolve the ferrous sulfate in a mixture of water and an acid, whereafter oxygen is introduced into the solution, whereby a ferric sulfate solution is formed. An improved process is described in application PCT/FI95/00045, in which process sulfuric acid is added to ferrous sulfate, whereby a slurry containing sulfuric acid is produced; this slurry is oxidized at an elevated pressure and a temperature of 60-140 °C. The oxidizing reaction in this case is

$$FeSO_4 + ½\ O_2 + H_2SO_4 + x\ H_2O \rightarrow Fe_2(SO_4)_3 + y\ H_2O$$

whereby a ferric sulfate slurry is formed, which can be granulated and used in a dissolved form as a water purification chemical, provided that the raw material does not contain impurities in too large an amount for water purification applications. The granulated product typically contains Fe approx. 20 %. The economy of the use of this product would be improved if a higher iron content in the product could be achieved. The handleability of the product could be further improved by decreasing the hygroscopicity of the product and by increasing its granule strength. Furthermore, by reducing the acidity of the product the corrosion it causes in humid conditions could be reduced.

If the ferrous sulfate used as the raw material contains injurious impurities, as often is the case, the product obtained cannot necessarily be used for all water treatment purposes. Very often ferrous sulfates contain Mn as an impurity, and therefore a chemical prepared from such a ferrous sulfate can be used only for applications in which there are no restrictions. This, in turn, reduces the usability and value of the product.

Efforts have been made to solve the problem caused by impurities by precipitating from ferrous sulfate poorly soluble hydroxide- and sulfate-based salts, such as ferric hydroxide sulfate and sodium jarosite. Such a method is presented in the applicant's earlier patent application PCT/FI94/00588. In this method, ferrous sulfate is dissolved in a mixture of water and an acid, and, if necessary, a suitable sodium compound is added to the solution. The obtained solution is oxidized at an elevated temperature, whereupon a poorly soluble iron compound free of impurities precipitates out from the solution, as stated above. The precipitated iron compound is separated by filtration. This method involves the problem that the remaining acidic mother liquor must first be neutralized and thereafter treated so that it can be disposed of safely. In practice the measures required by the treatment of the mother liquor ruin the economy of the method. Another problem involved is that the sodium jarosite obtained has a relatively low solubility and must therefore be redissolved in sulfuric or hydrochloric acid.

The article by J. Bohacek et al. in J. Mater. Sci. 28 (1993), pp. 2827-2832, describes a process in which ferrous sulfate is oxidized to ferric sulfate and is precipitated as hydronium jarosite or partly as goethite for use as a pigment. Czechoslovakian patent 277141 discloses a corresponding precipitation and also states that the remaining solution which contains ferric sulfate is suitable for use as a coagulant for water treatment.

It is known to prepare ferric compounds from pickling solutions, which are chloride or sulfide solutions, by adding, for example, sulfuric acid and hydrochloric acid to the solution, and by oxidizing the solution, whereupon corresponding ferric compounds are formed. In case the initial solution contains impurities, these same impurities will be present in the solution which contains the ferric compound. Thus the usability, as a water treatment chemical, of the product obtained depends on the concentration of these impurities in the raw material.

It is an object of the invention to provide a process by which ferrous raw materials obtained as a byproduct

or a waste from industrial processes can be used more effectively than previously in water treatment. It is a specific object to prepare from impure raw materials an impurity-free ferric chemical for demanding water treatment processes, in particular for the purification of drinking water, and at the same time an impurity-containing ferric chemical which is usable for waste water treatment. These objects are achieved by the process according to the invention, which is characterized by the facts stated in Claim 1.

In the process according to the invention, it is possible to oxidize a mixture which contains only a ferrous raw material and possibly water, in which case the oxidization step will yield a water-insoluble ferric compound, i.e. goethite or hydronium jarosite, and a slurry which contains a ferric compound in a soluble form; when necessary, the slurry is solidified and converted in a subsequent step to ferric chemicals in the form of a solution.

The essential point of the invention is thus that only a portion, typically 30-60 %, of the iron present in the raw material is precipitated as an insoluble ferric compound, the rest of the iron remaining in a soluble form. This can be achieved by not adding any acid to the raw material, in which case during the oxidation step the precipitation reaction will continue until an equilibrium between the precipitating, water-insoluble ferric compound and the water-soluble ferric compound is reached.

It is possible to shift the equilibrium towards the precipitate by adding a compound which reacts in the manner of a base, preferably a Mg compound such as magnesium oxide or hydroxide. The basic substance raises the pH of the solution, whereupon the precipitation reaction will restart and the reaction will continue until the acid formed in the precipitation reaction decreases the pH to a level at which the precipitation reaction ceases. Respectively, it is possible to shift the equilibrium towards the soluble compound by adding an acid. In principle, the precipitation yield can be adjusted by 0-100 %, although the idea of the invention is, in accordance to what is stated above, that both a precipitated pure ferric compound and a solution which contains ferric iron are obtained.

According to the invention, a two-part product is thus obtained, both parts being usable as water treatment chemicals. In case the raw material contains impurities, these will pass into the water-soluble part of the product. Thus the process will yield a product the impurity-free insoluble part of which can easily be separated from the soluble part which contains impurities.

The solution phase and the solid phase of the slurry obtained as the result of the oxidation and precipitation can be separated from each other by, for example, filtration, in which case the solution phase is as such suitable for use as a water treatment chemical, and the solid phase is redissolved in an acid. An alternative and often especially advantageous procedure is, however, to solidify the slurry by granulation or some other corresponding method, such as compacting, whereby a solid intermediate product which contains the ferric iron is obtained. In this form the product is easier to transport to the desired place of use, where it is dissolved in water in order to separate a pure solid ferric compound.

When the raw material is a hydrous ferrous sulfate, such as ferrous sulfate monohydrate or heptahydrate, the following procedure is used. The solid ferrous salt is oxidized with oxygen in a pressurized reactor at an elevated temperature without the addition of an acid or water. During the oxidation step the ferrous salt dissolves in its own crystal water, and at the same time hydronium jarosite $H_3OFe_3(OH)_6(SO_4)_2$ begins to precipitate. The reaction could be described as follows:

$$5\ FeSO_4 \times H_2O + 1\ 1/4\ O_2 \rightarrow \begin{matrix} H_3OFe_3(OH)_6(SO_4)_2\ (s) \\ Fe_2(SO_4)_3\ (l) \end{matrix}$$

During the oxidation, an equilibrium is established between the ferric sulfate solution and hydronium jarosite. This means that approximately one half of the iron is contained in the solution and the rest is in the precipitated hydronium jarosite. The oxidized slurry can be granulated to produce a solid intermediate product. The solid intermediate product contains hydronium jarosite 30-40 % and additionally ferric sulfate $Fe_2(SO_4)_3 \cdot x\ H_2O$ in different forms. The product contains Fe 25-27 %, which is 20 % more than in conventional ferric sulfate products. By further drying, even higher Fe contents can be obtained. The product is also less hygroscopic than conventional ferric products, and its granule strength is higher and its acidity is lower. The product is in granule form and thus easy to transport.

Owing to the natural equilibrium, 40-60 % of the iron is contained in jarosite and 60-40 % is in a soluble form. As stated above, the yield of jarosite can be increased from this value by adding a basic compound to the reaction mixture.

Coagulants in the form of a solution are produced from the granulated product by dissolving it first in water, whereupon a ferric sulfate solution suitable for the treatment of waste water or the treatment of sludge is obtained from the soluble part. The ratio of impurities to Fe in the solution is twice that in the raw material. The undissolved part is

used for preparing a coagulant free of impurities.

The undissolved part is a very pure product having a high iron content (33-36 %). When dissolved, it is suitable for the purification of drinking water. The undissolved precipitate is dissolved in sulfuric or hydrochloric acid at an elevated temperature. The undissolved part may also be used for the preparation of a nitrate-containing chemical coagulant, in which case its nitrate content is higher than that mentioned above (the molar ratio of $NO_3$ to Fe approx. 1.5-2).

Not only ferrous sulfate but also a pickling mother liquor which contains ferrous chloride (Fe approx. 12 %) and, among others, Mn as an impurity can be used as the raw material. When such a raw material is oxidized at a temperature of 120 °C and a pressure of 6 bar, oxidation will take place, for example, as follows:

$$3\ FeCl_2 + 3/4\ O_2 + x\ H_2O \rightarrow 2\ FeCl_3\ (1) + FeO(OH)\ (s) + y\ H_2O$$

The insoluble compound formed in the oxidation is goethite, which precipitates in the oxidation reaction. On the basis of the reaction equation, 1/3 of the iron precipitates as goethite in which the ratio of Mn to Fe is smaller than in the raw material solution. The slurry can be granulated, if necessary. In this case, also, the precipitation yield can be adjusted in the manner described above.

A number of advantages are gained by the use of the invention. First, the preparation of the product is more advantageous than by the conventional process, because sulfuric acid is not required in the oxidation step. The granulate obtained as an optional intermediate product contains more iron than do the ferric products prepared by the conventional acid addition method. This, for its part, reduces the transportation costs. Owing to the lower hygroscopicity and acidity of the granulate, it causes less corrosion in humid conditions. Second, the preparation process yields a two-part product, one part containing a very pure ferric compound and the other containing most of the impurities present in the raw material. Thus the process makes it possible to use impure raw materials while a pure ferric product suitable for the purification of drinking water is obtained.

The two parts contained in the product obtained by oxidation can be separated from each other either before the slurry is turned into a solid intermediate product or in the step in which the solid intermediate product is dissolved. There are a number of alternatives in the dissolving step. The dissolution of the intermediate product in water and the separation of the insoluble part produce a solution which contains ferric iron and is suitable for use, for example, in the treatment of waste water or sludge, uses in which the purity requirements of the iron chemical do not restrict its use. The undissolved part, in turn, is a very pure iron chemical which can be dissolved in an acid. The solution obtained is suitable for use, for example, in the purification of drinking water or for other purification purposes requiring a pure chemical. The process thus provides a very flexible, versatile and economical product range for various water treatment applications.

The invention also relates to the intermediate products optionally formed in the process described above, especially a granulated product consisting of a water-insoluble ferric compound, which is hydronium jarosite $H_3OFe_3(OH)_6(SO_4)_2$, of a water-soluble ferric compound, and of water-soluble impurities, if any.

The invention is described below in greater detail with reference to the accompanying drawings, wherein

- Figure 1 depicts a schematic diagram of the preparation of a granular intermediate product according to an embodiment of the invention;
- Figure 2 depicts a schematic diagram of another embodiment of the invention for the preparation of a pure ferric compound and a solution which contains ferric iron;
- Figure 3 depicts a schematic diagram of the dissolution of a pure ferric compound in an acid; and
- Figure 4 depicts a schematic diagram of the dissolution of a granular intermediate product in water and thereafter in an acid.

Figure 1 depicts a diagram which illustrates one embodiment of the invention. Water is added to the ferrous sulfate (17.5 % Fe) obtained as a byproduct from the production process of titanium dioxide. The mixture obtained is directed to the oxidation step, wherein the reactor temperature is typically raised to approx. 120 °C and the pressure to 1-10 bar, preferably to 5-6 bar. Oxygen is fed into the reactor, and the mixture is stirred in order to improve the dispersion of oxygen. In these conditions the iron oxidizes and at the same time a water-insoluble ferric salt is formed, which in this case is hydronium jarosite. The precipitation continues until an equilibrium is established between the said salt and the soluble ferric sulfate. The slurry obtained from the oxidation step is directed to granulation, wherein water is evaporated out of the slurry, if necessary. The granules obtained contain Fe approx. 26 %, part of which is in the form of hydronium jarosite and the rest in the form of ferric sulfate.

Figure 2 depicts another embodiment of the process according to the invention. The raw material is a chloride-based pickling solution. This solution is directed to the oxidation reactor; the reactor is heated and oxygen is introduced

into it. In this case, ferric oxide hydroxide, i.e. goethite FeO(OH), which is a ferric compound insoluble in water, precipitates out during the oxidation reaction. Ferric chloride in a soluble form remains in the solution phase. The precipitated ferric compound is separated by filtration.

Figure 3 depicts the dissolution of the precipitate, obtained in accordance with Figure 2, in an acid, which may, as shown in the figure, be sulfuric acid, hydrochloric acid or nitric acid. A solution suitable for the treatment of water is obtained and, depending on the acid, it contains ferric sulfate, ferric sulfate chloride or ferric sulfate nitrate, respectively. Thus the acid used for the dissolution may be selected as desired, and the choice of the acid for the dissolution may be determined, for example, on the basis of the requirements of the water treatment process or the availability of the acid.

Figure 4 depicts the dissolution of a granular product prepared by the process according to Figure 1; in the first step the product is dissolved in water and subsequently the undissolved part is separated and dissolved in optional acids. According to the figure, one half of the iron present in the granular product dissolves in the aqueous solution. After the dissolution step the solution is separated by filtration, and the filtrate can as such be used for water treatment. If the raw material contains some impurity, Mn in the case of Figure 4, practically all of the Mn passes into this part. One half of the iron present in the product is in a water-insoluble precipitate, which in the second dissolution step is dissolved in an acid; according to the figure this acid may be sulfuric acid, hydrochloric acid or nitric acid. Depending on the acid, a solution suitable as such for water treatment is obtained, the solution containing, respectively, ferric sulfate, ferric sulfate chloride or ferric sulfate nitrate.

The invention is described below further with the help of examples.

**Example 1**

Ferrous sulfate containing 17.5 % Fe was fed into a dissolution vessel at a rate of 7 t/h. The ferrous sulfate was dissolved in its own crystal water by heating. The resulting slurry was oxidized at a pressure of 5.2-5.5 bar and a temperature of 122-125 °C. The oxidized slurry was fed into a granulation drum, and the granules were dried. The experiment took in total 50 h, and the total yield of granular product was 260 t. The moisture content of the product was 12-14 %, and it contained 0.37 % $Fe^{2+}$, 25 % $Fe^{3+}$ and 15.7 % S. According to an X-ray diffraction, the product contained, among others, the following crystalline compounds: $H_3OFe_3(SO_4)_2(OH)_6$ and $Fe_{14}O_3(SO_4)_{18}*63H_2O$. The hygroscopicity of the product, i.e. the increase in weight when a sample is kept for 6 d under a relative humidity of 88 %, was as low as 7-9 %. The hygroscopicity of conventional granular ferric sulfate is usually 17-24 %. Respectively, the granule strength of the product was 100-170 N, whereas that of conventional granular ferric sulfate is only 75-90 N.

**Example 2**

300 g of the product obtained from the test run according to Example 1 was dissolved in 180 g of water. The dissolution time was 2 h and the temperature was 40 °C. Thereafter the solution was filtered; 371 g of filtrate and 132 g of a residue washed with water (158 g) were obtained. The dry matter content of the filtration residue was 72 %, and the residue contained 34 % Fe and 0.0035 % Mn, calculated from the dry matter. The filtrate was analyzed, and it contained 11.3 % Fe, 0.28 % $Fe^{2+}$, 0.13 % Mn, 230 ppm Zn, <5 ppm Cr, 23 ppm Ni, <5 ppm Pb, <0.02 ppm Cd, <0.01 ppm Hg. The density of the filtrate was 1.446 g/$cm^3$, and its pH was 2.04 (dilution 1:10).

**Example 3**

90 g of the filtration residue obtained from the experiment according to Example 2 was dissolved in sulfuric acid (34 g 96 %, 77 g $H_2O$). The dissolution time was 2 h and the temperature was 60 °C. The solution obtained was filtered, and 108 g of filtrate was obtained. The filtration residue was 0.149 g, which corresponds to 0.23 % of the amount of the initial substance. The filtrate contained 12.7 % Fe, 0.01 % $Fe^{2+}$, 0.0018 % Mn, 4.7 ppm Zn, <5 ppm Cr, <5 ppm Ni, <5 ppm Pb, <0.02 ppm Cd, <0.01 ppm Hg. The density of the filtrate was 1.592 g/$cm^3$ and its pH was 1.44 (1:10).

**Example 4**

88 g of the product obtained from the test run according to Example 1 was dissolved in hydrochloric acid (37 %), in nitric acid (65 %) and in sulfuric acid (96 %), in accordance with the table below. The aim was a solution containing iron 11 %, and thus water was added in the amount required. In the dissolution experiments, the insoluble part was determined after dissolution for 2 h or 5 h and was given in % by weight of the amount of the granular product. The amount of acid in the experiments was an equivalent amount calculated on the basis of the iron. The results are shown in the following table.

Table.

| solubility in acids of the granular product obtained by the process according to the invention. | | | | | |
|---|---|---|---|---|---|
| Acid | Fe % | Acid amount | Time h | T °C | Insoluble % |
| HCl | 11 | equivalent | 2 | 80 | 0.15 |
| " | 11 | " | 2 | 60 | 0.19 |
| " | 11 | " | 5 | 40 | 0.79 |
| $HNO_3$ | 11 | " | 5 | 80 | 0.26 |
| " | 11 | " | 5 | 60 | 0.58 |
| " | 11 | " | 5 | 40 | 5.92 |
| $H_2SO_4$ | 11 | " | 2 | 80 | 0.07 |
| " | 11 | " | 5 | 60 | 0.08 |
| " | 11 | " | 5 | 40 | 0.26 |

The experiments clearly show that sulfuric acid is the most effective solvent, hydrochloric acid the second most effective and nitric acid the least effective, but even nitric acid is capable of dissolving the product if a sufficiently long dissolution time and a high temperature are used.

**Example 5**

1000 kg of a pickling solution which contained 12 % Fe was oxidized with oxygen ($O_2$ 18 kg) at a temperature of 120 °C and a pressure of 6 bar, An insoluble ferric compound, which according to the X-ray diffraction was FeO (OH), precipitated out from the solution. The precipitate contained 46.5 Fe, as calculated from the dry matter. Approx. 1/3 of the iron present in the initial solution was in the precipitate, and the rest was in the form of soluble ferric chloride. The ferric chloride solution contained Fe 10.7 %. The precipitate was easily filtrated, and it dissolved in hydrochloric acid at a temperature of 70-80 °C.

**Example 6**

Some water (39 g) was taken into a 2-liter flask, and the water was heated to a temperature of 50-60 °C. Thereafter, ferrous sulfate was added gradually into the flask as ferrous sulfate dissolved in its own crystal water. Ferrous sulfate was added in a total amount of 3 kg. Thereafter the solution was transferred to an autoclave, the temperature of which was raised to 127 °C and into which oxygen was introduced. The pressure in the autoclave was approx. 6 bar. During the oxidation time of 6 h, a total of 1814 g of MgO slurry, which contained 207 g of MgO, was pumped into the autoclave. After approx. 3 h of oxidation, when approx. 1150 g of the MgO slurry had been fed in, a sample was taken from the autoclave. The precipitate was separated from the sample by filtration. According to X-ray diffraction, the precipitate was hydronium jarosite. On the basis of the analysis, 74 % of the iron in the sample was in the jarosite and the rest in the solution. The iron content in the precipitate was 35 % and in the filtrate it was 5.1 %. At the end of the oxidation time, i.e. after approx. 6 hours of oxidation, when all of the above-mentioned amount of MgO slurry had been fed in, the batch was allowed to cool. The precipitate was separated by filtration, and according to the X-ray diffraction it was hydronium jarosite. The jarosite precipitate now contained 85 % of the iron and the rest was in the solution. On the basis of the analysis, the precipitate contained 35 % Fe, 0.012 % Mg, and 24 ppm Mn Respectively, the filtrate contained 2.5 % Fe, 0.049 % $Fe^{2+}$, 2.80 % Mg, and 983 ppm Mn.

For an expert in the art it is clear that the various embodiments of the invention are not restricted to the above examples but may vary within the scope of the accompanying claims.

## Claims

1. A process for preparing, from ferrous iron, water treatment solutions which contain ferric iron, in which process a raw material consisting of ferrous iron in the form of an aqueous solution and possibly impurities is oxidized under heating so that a precipitating, substantially pure ferric compound and a solution phase which contains the said impurities are obtained, **characterized in that** the precipitation is conducted in such a manner that part of the ferric iron precipitates as goethite FeO(OH) or, in the presence of sulfate ions, in the form of hydronium jarosite $H_3OFe_3(OH)_6(SO_4)_2$, while part of the ferric iron remains in a water-soluble form in the solution phase, that the

obtained slurry which comprises the precipitated pure ferric compound and the solution phase is dried to form granules, that the granules are in a subsequent step reconverted to a slurry by adding water, and that the pure ferric compound is separated from the solution phase and is converted, by dissolution in an acid, to a purification chemical suitable for the treatment of drinking water, the remaining solution phase which contains soluble ferric iron being as such usable for the treatment of waste water.

**2.** A process according to Claim 1, **characterized in that** the precipitated pure ferric compound is separated from the solution phase by filtration.

**3.** A process according to any of the above claims, **characterized in that** the raw material is a ferrous sulfate $FeSO_4$, which may contain impurities and which is converted to an aqueous solution either by heating so that the ferrous sulfate dissolves in its own crystal water or by adding water.

**4.** A process according to Claim 3, **characterized in that** approx. 10-60 %, preferably 40-60 %, of the ferric iron is precipitated as hydronium jarosite $H_3OFe_3(OH)_6(SO_4)_2$, the rest remaining as ferric sulfate $Fe_2(SO_4)_3$ in the solution phase.

**5.** A process according to Claim 3 or 4, **characterized in that** the distribution of ferric iron between the precipitating hydronium jarosite and the solution phase is regulated by adjusting the pH of the solution by means of an acid or a base, such as magnesium oxide or magnesium hydroxide.

**6.** A process according to any of Claims 1-2, **characterized in that** the raw material is a pickling solution which contains ferrous chloride $FeCl_2$, in which case goethite FeO(OH) precipitates out from the oxidized solution while ferric chloride $FeCl_3$ remains in the solution.

**7.** A granulated product formed as an intermediate product in a process according to Claim 1, **characterized in that** it contains a water-insoluble ferric compound, which is hydronium jarosite $H_3OFe_3(OH)_6(SO_4)_2$, water-soluble ferric iron, and possibly water-soluble impurities.

**8.** A product according to Claim 7, **characterized in that** approx. 10-60 %, preferably 40-60 %, of the ferric iron contained in it is in the form of hydronium jarosite and the rest in the form of ferric sulfate.

**Patentansprüche**

**1.** Verfahren, ausgehend von Eisen(II), zum Herstellen von Lösungen zur Wasserbehandlung, die Eisen(III) enthalten, wobei in diesem Verfahren ein aus Eisen(II) bestehendes Rohmaterial in Form einer wäßrigen Lösung und möglichen Verunreinigungen unter Erhitzen oxidiert wird, so daß eine sich absetzende, im wesentlichen reine Eisen(III)-Komponente und eine Lösung, die die Verunreinigungen enthält, erhalten werden,
**dadurch gekennzeichnet, daß**
die Fällung in einer derartigen Weise durchgeführt wird, daß ein Teil des Eisen(III) als Goethit FeO(OH) oder, in Gegenwart von Sulfationen, in Form von Hydroniumjarosit $H_3OFe_3(OH)_6(SO_4)_2$ ausfällt, während ein Teil des Eisen (III) in wasserlöslicher Form in der Lösung verbleibt,
daß die erhaltenen Suspension, welche aus der ausgefallenen Eisen(III)-Komponente und der Lösung besteht, zur Bildung von Granulat getrocknet wird,
daß das Granulat in einem darauffolgenden Schritt durch Zugabe von Wasser wieder in eine Suspension überführt wird,
und daß die reine Eisen(III)-Komponente von der Lösung abgetrennt wird und durch Auflösen in einer Säure zu einer Reinigungschemikalie für die Behandlung von Trinkwasser umgesetzt wird,
wobei die verbleibende Lösung, welche lösliches Eisen(III) enthält, als solche für die Behandlung von Abwasser benutzt werden kann.

**2.** Verfahren nach Anspruch 1, **dadurch gekennzeichnet, daß** die ausgefallene reine Eisen(III)-Komponente von der Lösung durch Filtration abgetrennt wird.

**3.** Verfahren nach einem der vorangegangenen Ansprüche, **dadurch gekennzeichnet, daß** das Rohmaterial Eisen (II)sulfat $FeSO_4$ ist, das Verunreinigungen enthalten kann und das entweder durch Erhitzen, so daß sich das Eisen (II)sulfat in seinem eigenen Kristallwasser löst, oder durch Zugabe von Wasser in eine wäßrige Lösung überführt

wird.

4. Verfahren nach Anspruch 3, **dadurch gekennzeichnet, daß** ungefähr 10 - 60 %, vorzugsweise 40 - 60 %, des Eisen(II) als Hydroniumjarosit $H_3OFe_3(OH)_6(SO_4)_2$ ausgefällt wird, wobei der Rest als Eisen(III)sulfat $Fe_2(SO_4)_3$ in Lösung verbleibt.

5. Verfahren nach Anspruch 3 oder 4, **dadurch gekennzeichnet, daß** die Verteilung des Eisen(III) zwischen dem ausfallenden Hydroniumjarosit und der Lösung durch Anpassen des pH-Wertes der Lösung mit Hilfe einer Säure oder einer Base wie Magnesiumoxid oder Magnesiumhydroxid, geregelt wird.

6. Verfahren nach einem der Ansprüche 1 - 2, **dadurch gekennzeichnet, daß** das Rohmaterial eine Beizlösung ist, welche Eisen(II)chlorid $FeCl_2$ enthält, wobei in diesem Fall Goethit FeO(OH) aus der oxidierten Lösung ausfällt, während Eisen(III)chlorid $FeCl_3$ in der Lösung verbleibt.

7. Granuliertes Produkt, gebildet als ein Zwischenprodukt in einem Verfahren nach Anspruch 1, **dadurch gekennzeichnet, daß** es eine wasserlösliche Eisen(III)komponente enthält, wobei es sich um Hydroniumjarosit $H_3OFe_3(OH)_6(SO_4)_2$ handelt, wasserlösliches Eisen(III), und möglicherweise wasserlösliche Verunreinigungen.

8. Produkt nach Anspruch 7, **dadurch gekennzeichnet, daß** ungefähr 10 - 60 %, vorzugsweise 40 - 60 %, des darin enthaltenen Eisen(III) in Form von Hydroniumjarosit und der Rest in Form von Eisen(III)sulfat vorliegt.

## Revendications

1. Procédé pour préparer, à partir de fer ferreux, des solutions de traitement d'eau qui contiennent du fer ferrique, dans lequel le procédé, un matériau brut constitué de fer ferreux sous la forme d'une solution aqueuse et potentiellement d'impuretés est oxydé sous chauffage de sorte qu'un composé ferrique pratiquement pur se précipitant et une phase en solution qui contient lesdites impuretés sont obtenus, **caractérisé en ce que** la précipitation est effectuée de telle sorte qu'une partie du fer ferrique se précipite sous forme de goethite FeO(OH) ou, en présence d'ions sulfate, sous la forme de jarosite d'hydronium $H_3OFe_3(OH)_6(SO_4)_2$, alors qu'une partie du fer ferrique reste sous une forme soluble dans l'eau dans la phase en solution, **en ce que** la boue obtenue qui comporte le composé ferrique pur précipité et la phase en solution est séchée pour former des granules, **en ce que** les granules sont lors d'une étape ultérieure reconvertis en une boue en ajoutant de l'eau, et **en ce que** le composé ferrique pur est séparé de la phase en solution et est converti, par dissolution dans un acide, en un composé chimique de purification adapté pour le traitement d'eau potable, la phase en solution restante qui contient le fer ferrique soluble telle quelle est utilisable pour le traitement d'eaux usées.

2. Procédé selon la revendication 1, **caractérisé en ce que** le composé ferrique pur précipité est séparé de la phase en solution par filtration.

3. Procédé selon l'une quelconque des revendications précédentes, **caractérisé en ce que** le matériau brut est un sulfate ferreux $FeSO_4$, qui peut contenir des impuretés et qui est converti en une solution aqueuse par chauffage de sorte que le sulfate ferreux se dissout dans sa propre eau cristalline ou par ajout d'eau.

4. Procédé selon la revendication 3, **caractérisé en ce qu'**approximativement 10 à 60 %, de préférence 40 à 60 %, du fer ferrique est précipité sous forme de jarosite d'hydronium $H_3OFe_3(OH)_6(SO_4)_2$, le reste restant sous forme de sulfate ferrique $Fe_2(S0_4)_3$ dans la phase en solution.

5. Procédé selon la revendication 3 ou 4, **caractérisé en ce que** la distribution de fer ferrique entre la jarosite d'hydronium précipitant et la phase en solution est régulée en ajustant le pH de la solution par l'intermédiaire d'un acide ou d'une base, tel que de l'oxyde de magnésium ou de l'hydroxyde de magnésium.

6. Procédé selon l'une quelconque des revendications 1 à 2, **caractérisé en ce que** le matériau brut est une solution de décapage qui contient du chlorure ferreux $FeCl_2$, auquel cas la goethite FeO(OH) se précipite à partir de la solution oxydée alors que le chlorure ferrique $FeCl_3$ reste dans la solution.

7. Produit granulé formé en tant que produit intermédiaire dans un procédé selon la revendication 1, **caractérisé en ce qu'**il contient un composé ferrique insoluble dans l'eau, qui est une jarosite d'hydronium $H_3OFe_3(OH)_6(SO_4)_2$,

du fer ferrique soluble dans l'eau, et potentiellement des impuretés solubles dans l'eau.

**8.** Produit selon la revendication 7, **caractérisé en ce qu'**approximativement 10 à 60 %, de préférence 40 à 60 %, du fer ferrique contenu dans celui-ci se trouve sous la forme de jarosite d'hydronium et le reste sous la forme de sulfate ferrique.

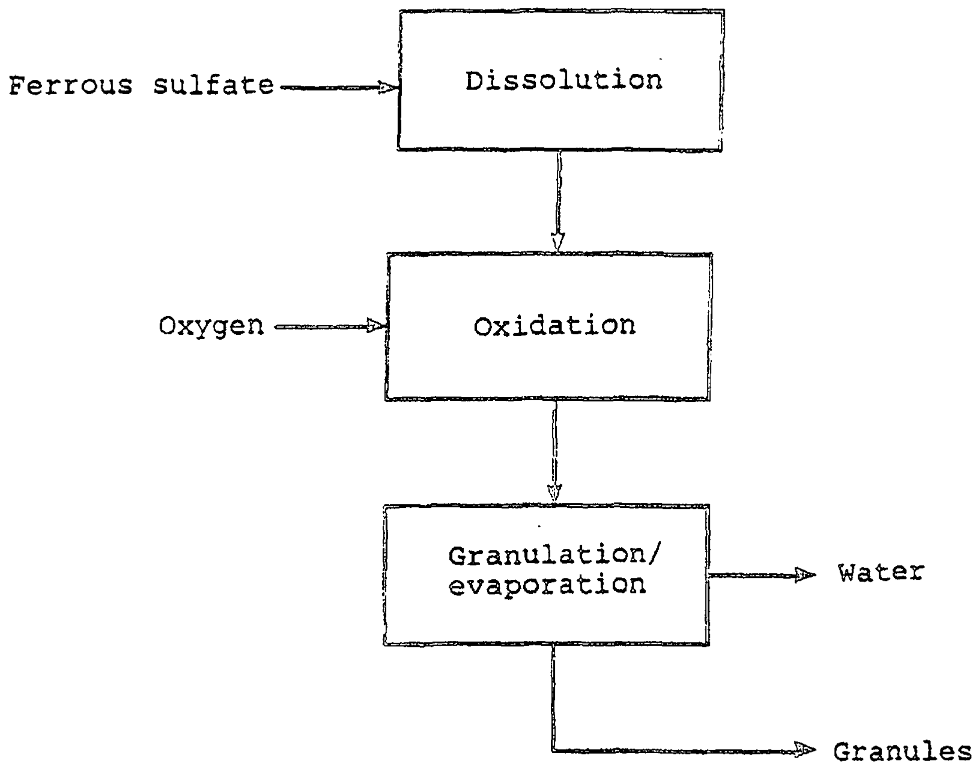
Ferrous sulfate
Dissolution
Oxygen
Oxidation
Granulation/
evaporation
Water
Granules

FIG. 1

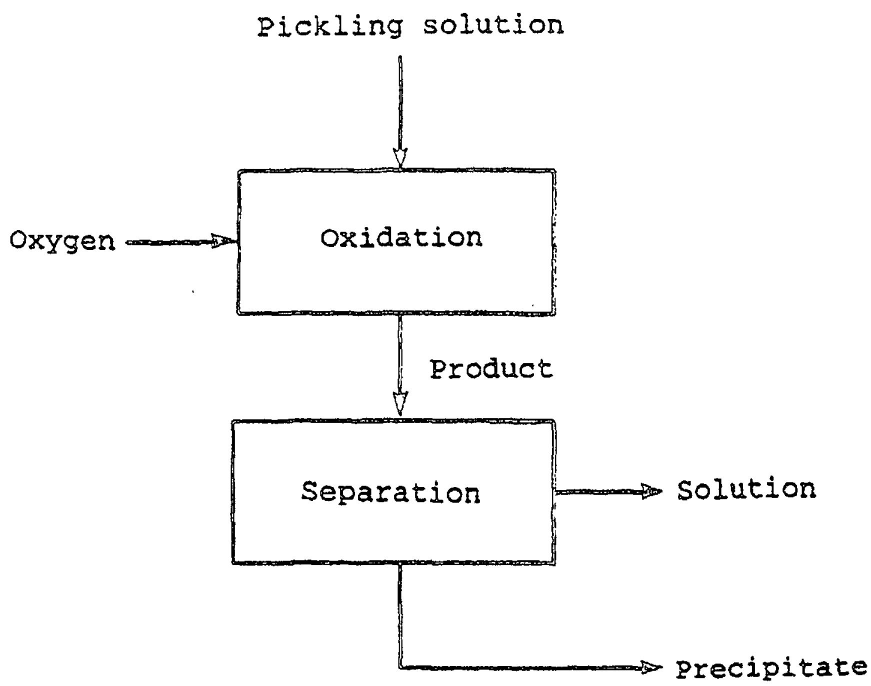
Pickling solution
Oxygen
Oxidation
Product
Separation
Solution
Precipitate

FIG. 2

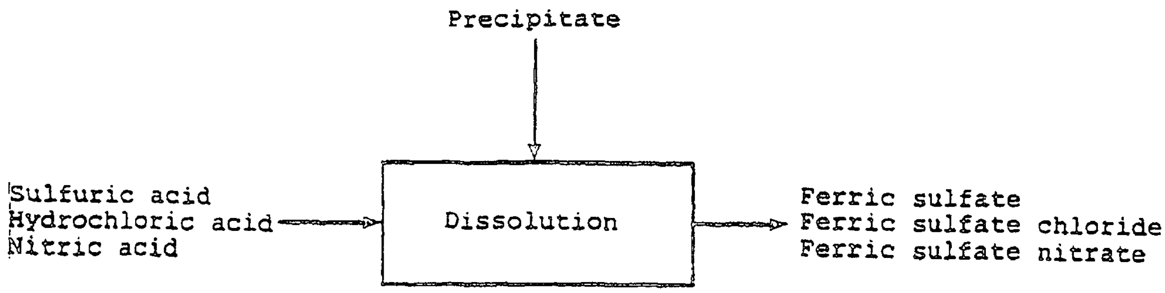
Precipitate
Sulfuric acid
Hydrochloric acid
Nitric acid
Dissolution
Ferric sulfate
Ferric sulfate chloride
Ferric sulfate nitrate

FIG. 3

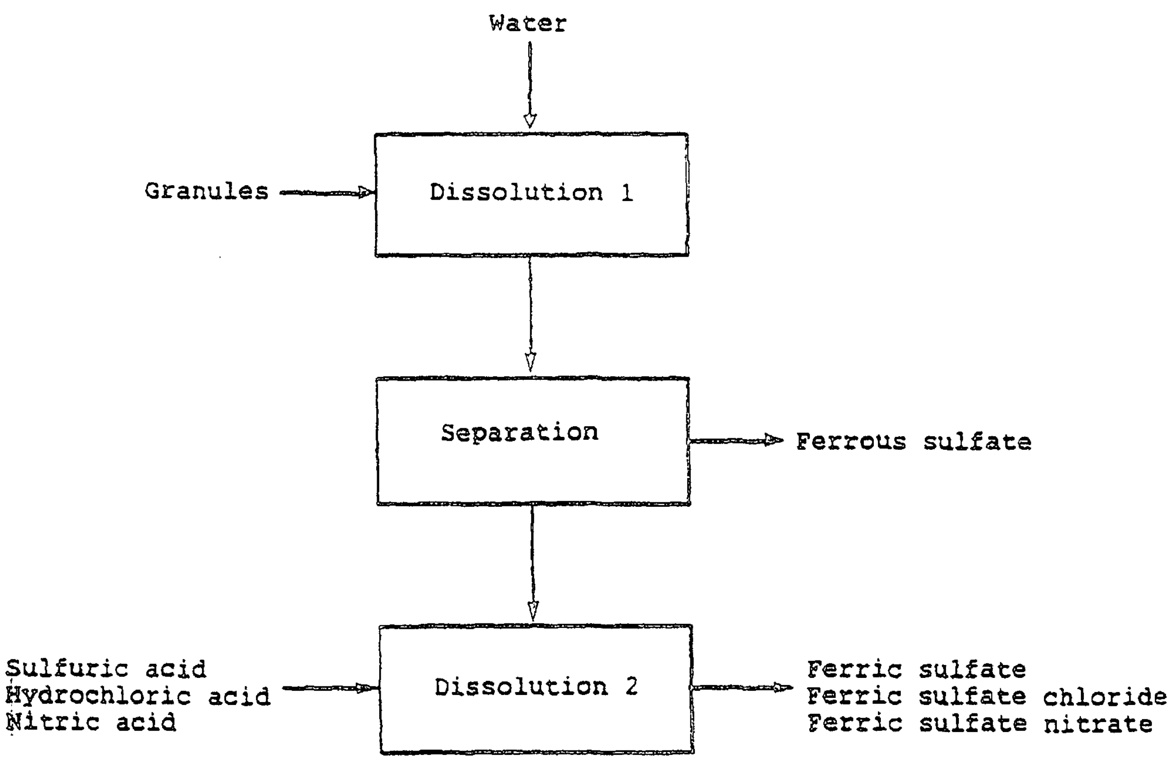
Water
Granules
Dissolution 1
Separation
Ferrous sulfate
Sulfuric acid
Hydrochloric acid
Nitric acid
Dissolution 2
Ferric sulfate
Ferric sulfate chloride
Ferric sulfate nitrate

FIG. 4